# EUROPÄISCHE PATENTSCHRIFT

(11) **EP 3 528 357 B1**
(45) Veröffentlichungstag und Bekanntmachung des Hinweises auf die Patenterteilung: **30.11.2022**
(21) Anmeldenummer: 18156885.8
(22) Anmeldetag: 15.02.2018
(51) Int. Cl.: H02G 5/06

(54) **GASISOLIERTE ANLAGE MIT PARTIKELFALLENSYSTEM**
GAS-INSULATED ASSEMBLY WITH PARTICLE TRAP SYSTEM
INSTALLATION ISOLÉE AU GAZ POURVUE D'UN SYSTÈME DE PIÈGE À PARTICULES

(43) Veröffentlichungstag der Anmeldung: 21.08.2019
(73) Patentinhaber: Siemens Energy Global GmbH & Co. KG, 81739 München (DE)
(72) Erfinder: Berg, Thomas, 90408 Nürnberg (DE); Fedtke, Tom, 10969 Berlin (DE); Aksoy, Mesut, 10551 Berlin (DE); Kieper, Mario, 14532 Kleinmachnow (DE); Rose-Pötzsch, Alexander, 16341 Panketal (DE)

(56) Entgegenhaltungen:
- WO-A1-2017/055020
- DE-A1-102004 032 018
- JP-A- H0 993 735
- JP-A- H09 182 262
- JP-B2- 5 379 279
- US-A- 4 440 970
- US-B2- 8 173 896

## Beschreibung

Die Erfindung betrifft eine gasisolierte elektrische Anlage mit einem Innenleiter und einem den Innenleiter umgreifenden Außenrohr sowie mit einem Partikelfallensystem. Partikelfallensysteme werden in gasisolierten elektrischen Anlagen, insbesondere in gasisolierten Leitungen (GIL) und Schaltanlagen (GIS) zur Minimierung von Schäden eingesetzt, die durch frei bewegliche leitfähige Partikel verursacht werden können. Aufgrund von Abrieb bei Installation oder durch Vibrationen der gasisolierten Anlage können solche frei beweglichen Partikel in einem Innenraum der Anlage freigesetzt werden. Diese Partikel haben einen erheblichen Einfluss auf die Isolierfähigkeit der gasisolierten Anlage und können insbesondere die Durchschlagfestigkeit der Anlage beispielsweise durch Teilentladungen aufgrund von partikelverursachten Feldüberhöhungen stark reduzieren.

Um die frei beweglichen Partikel möglichst effektiv einzufangen, umfasst das Partikelfallensystem üblicherweise eine erste Partikelfalle, die in einem unteren Bereich des Innenraumes der Anlage an deren Außenrohr angeordnet ist, und/oder eine zweite Partikelfalle, die an einem Innenleiter der Anlage angeordnet ist.

Ein solches Partikelfallensystem ist beispielsweise aus der WO 2017/055020 A1 bekannt. Das bekannte Partikelfallensystem umfasst Partikelfallen, die derart in einer gasisolierten Leitung angeordnet sind, dass mittels der Partikelfallen Bereiche schwacher Feldstärke begrenzbar sind. In diesen Bereichen ist die elektrische Feldstärke im Vergleich zu der elektrischen Feldstärke außerhalb der Bereiche um mehrere Größenordnungen schwächer, so dass die auf sich darin befindende Partikel wirkende Kraft nicht ausreicht, um sie aus dem feldschwachen Bereich herauszuführen, sobald die Partikel, beispielsweise durch auf sie wirkende Gewichtskraft, in einen der feldschwachen Bereiche hinein gelangen. Zudem können sich in der Leitung befindende frei bewegliche Partikel aufgrund eines in der Leitung vorliegenden elektrischen Feldes, beispielsweise eines Wechselfeldes, eine Kraft erfahren. Aufgrund dieser Kraft werden die Partikel ebenfalls in Bewegung gesetzt und können so durch Partikeleintrittsöffnungen der Partikelfallen in einen feldstärkechwachen Bereich gelangen. Im günstigen Fall verbleiben die Partikel anschließend dort. Auf diese Weise können mittels des Partikelfallensystems Schäden durch Teilentladungen in der Leitung vermieden werden. Um die Wirkung der Partikelfallen des bekannten Partikelfallensystems zu verbessern, weist die Außenoberfläche der Partikelfalle des bekannten Partikelfallensystems eine Form auf, die im Betrieb möglichst geringe Unterschiede der elektrischen Feldstärke entlang einer Außenoberfläche der Partikelfallen ergibt.

Aus dem Stand der Technik sind bereits unterschiedliche Arten von Partikelfallen bekannt, insbesondere aus den Druckschriften JP 5 379279 B2, JP H09 182262 A, US 4 440 970 A, JP H09 93735 A und der US 8 173 896 B2.

Die Aufgabe der Erfindung besteht darin, eine artgemäße gasisolierte Anlage bereitzustellen, bei der die durch die frei beweglichen Partikel verursachten Schäden möglichst vermieden sind.

Die Aufgabe wird erfindungsgemäß durch eine Anlage mit den Merkmalen des Patentanspruchs 1 gelöst.

Demnach ist eine gasisolierte Anlage mit einem Partikelfallensystem bereitgestellt mit einer ersten Partikelfalle und einer zweiten Partikelfalle, wobei die erste Partikelfalle an einem Außenrohr der Anlage befestigt ist und die zweite Partikelfalle an einer Unterseite des Innenleiters angeordnet und mit ihm verbunden ist, wobei die erste Partikelfalle wenigstens ein erstes und ein zweites Abschirmelement umfasst, wobei mittels des ersten und des zweiten Abschirmelements ein sich vom Außenrohr in einen Innenraum der Anlage erstreckender und zum Innenraum hin unter Ausbildung einer ersten Partikeleintrittsöffnung geöffneter Schlitz begrenzbar ist, wobei das Verhältnis einer Tiefe des Schlitzes zu einer Breite des Schlitzes an der ersten Partikeleintrittsöffnung zwischen 1 und 8 beträgt, und die zweite Partikelfalle ein drittes, schirmförmiges Abschirmelement umfasst, mittels dessen ein sich zwischen dem Innenleiter und einem Schirm des schirmförmigen Abschirmelements erstreckender Spalt im Innenraum der Anlage begrenzbar ist, der unter Ausbildung einer zweiten Partikeleintrittsöffnung zum Innenraum hin geöffnet ist, wobei das Verhältnis einer Höhe des Spaltes zu einer Schirmdicke des schirmförmigen Abschirmelements zwischen 1 und 5 beträgt, wobei die zweite Partikelfalle sich in einem Winkelbereich zwischen einem -45-Grad-Winkel und einem +45-Grad-Winkel bezogen auf eine Senkrechtachse durch einen Mittelpunkt des Innenleiters befindet. Jede der Partikelfallen des Partikelfallensystems kann demnach mehrere Abschirmelemente umfassen, wobei die Abschirmelemente keine separaten Bauteile sein müssen. Die Partikelfallen können beispielsweise einstückig ausgebildet sein. Ferner können die Partikelfallen in Bauteile der Anlage integriert sein.

Eigene Untersuchungen haben ergeben, dass im Betrieb der Anlage, insbesondere bei Einschaltvorgängen und Polaritätswechseln, die sich in der ersten Partikelfalle befindenden frei beweglichen Partikel wieder aktiv werden und die Partikelfalle verlassen können. Aus diesem Grund ist es vorteilhaft, den durch die Partikelfalle gebildeten feldschwachen Bereich so zu gestalten, dass die Partikel eigene Trägkeitskraft nicht überwinden können. So verbleiben sie aufgrund der eigenen Gewichtskraft im feldschwachen Bereich der Partikelfalle. Der Effekt der Aktivierung der Partikel bei Zuschalten bzw. Polaritätswechsel, z.B. von positiver auf negative Polarität, ist dabei umso ausgeprägter, je schmaler der Schlitz ist. Gemäß den eigenen Untersuchungen ist es deshalb wichtig, das richtige Verhältnis von Schlitztiefe zur Schlitzbreite der Partikelfalle zu definieren. Um dies zu erreichen wird erfindungsgemäß vorgeschlagen, die erste Partikelfalle mit einem Schlitz auszustatten, dessen Tiefe-zu-Breite-Verhältnis zwischen 1 und 8, besonders bevorzugt zwischen 2 und 5 liegt. Umfasst die erste Partikelfalle mehrere Schlitze, so gilt der definierte Verhältnis-Bereich vorzugsweise für alle Schlitze. Die Tiefe des Schlitzes kann dabei durch die Entfernung von der Partikeleintrittsöffnung der Partikelfalle bis zum tiefsten Punkt des Schlitzes definiert sein. Entsprechend kann die Breite des Schlitzes an der Partikeleintrittsöffnung als die Distanz der beiden Abschirmelemente definiert werden, die den Schlitz begrenzen. Diese Distanz kann beispielsweise durch eine maximale Größe derjenigen Partikel bestimmt sein, die durch die Partikeleintrittsöffnung in den Schlitz noch gelangen können.

Eigene Untersuchungen haben zudem ergeben, dass es von Vorteil ist, wenn die Partikelfalle derart konstruiert ist, dass die Partikel möglichst leicht in den Spalt der zweiten Partikelfalle eindringen können. Dazu ist es wichtig, dass die Partikel einen relativ kurzen Weg entgegen ihrer Gewichtskraft haben. Dies kann dadurch erreicht werden, dass ein vorgegebener Wert für das Verhältnis der Spalthöhe zur Schirmdicke eingehalten wird. Erfindungsgemäß beträgt dieses Verhältnis zwischen 1 und 5, besonders bevorzugt zwischen 2 und 4. Die Höhe des Spaltes kann dabei als eine kleinste Entfernung zwischen dem Schirm des schirmförmigen Abschirmelements und dem Innenleiter oder dem Fußpunkt der zweiten Partikelfalle definiert sein.

Bevorzugt betragen die Breite des Schlitzes an der ersten Partikeleintrittsöffnung und/oder die Breite des Spaltes an der zweiten Partikeleintrittsöffnung jeweils mindestens 4 mm, besonders bevorzugt mindestens 5 mm. Auf diese Weise können vorteilhaft insbesondere Partikel bis zu einer Größe von 4 mm bzw. 5 mm in den beiden Partikelfallen eingefangen werden. Nach eigenen Untersuchungen weisen die allermeisten auftretenden Partikel höchstens diese Größe auf. Dabei können die Partikel beispielsweise spindelförmig sein, wobei die Größe solcher Partikel durch ihre Länge gegeben ist.

Gemäß einer Ausführungsform der Erfindung umfasst die erste Partikelfalle ferner ein viertes, flügelförmiges Abschirmelement, mittels dessen ein sich zwischen dem Außenrohr und einem Flügel des flügelförmigen Abschirmelements erstreckender Hinterschnitt im Innenraum der Anlage begrenzbar ist, der unter Ausbildung einer dritten Partikeleintrittsöffnung zum Innenraum hin geöffnet ist, wobei das Verhältnis einer Länge des Hinterschnitts zu einer Höhe des Hinterschnitts an der dritten Partikeleintrittsöffnung zwischen 2 und 10, besonders bevorzugt zwischen 3 und 5, beträgt. Mit diesem Verhältnis kann vorteilhaft eine optimale Abschirmung der Partikel erreicht werden, um bei Polaritätswechseln bzw. Einschaltvorgängen eine Aktivierung der Partikel zu verhindern. Dabei kann die Länge des Hinterschnitts als die Distanz vom Fuß der Partikelfalle zur Partikeleintrittsöffnung definiert sein. Die Höhe des Hinterschnitts entspricht der Größe der Partikeleintrittsöffnung.

Für die Funktionsweise der zweiten Partikelfalle spielt das Problem der Aktivierung der Partikel ebenfalls eine Rolle. Die zweite Partikelfalle muss geeigneterweise demnach derart konstruiert sein, dass Partikel sich aus dem durch die Partikelfalle begrenzten Spalt nicht heraus bewegen können. Vorzugsweise liegt daher das Verhältnis einer Breite des Spaltes an der zweiten Partikeleintrittsöffnung zur Höhe des Spaltes zwischen 0,5 und 2, bevorzugt zwischen 0,5 und 1,5.

Je nach der Polarität der Spannung in der gasisolierten Anlage können unterschiedliche Anordnungen des Partikelfallensystems besonders vorteilhaft sein. Die Anlage umfasst die erste und die zweite Partikelfalle des Partikelfallensystems.

Gemäß einer Ausführungsform ist die erste Partikelfalle am Außenrohr angeordnet und mit ihm verbunden. Dies ist besonders vorteilhaft, falls die Polarität positiv ist, dass heißt, wenn der Innenleiter sich gegenüber dem Außenrohr auf einem positiveren Potenzial befindet, beispielsweise wenn der Innenleiter auf einem positiven Potenzial und das Außenrohr auf Erdpotenzial liegen. In diesem Fall ist die erste Partikelfalle besonders bevorzugt unterhalb des Innenleiters angeordnet, da dort die Aufenthaltswahrscheinlichkeit für die Partikel am höchsten ist. Dabei liegt das Verhältnis eines Innendurchmessers des Außenrohrs zu einer Breite der ersten Partikelfalle zwischen 2 und 13, besonders bevorzugt zwischen 4 und 10. Auf diese Weise kann die erste Partikelfalle vorteilhaft so groß gewählt werden, dass das Gefälle des Außenrohrs im Randbereich der Partikelfalle groß genug ist, um die Partikel bewirkt durch deren Gewichtskraft, selbstständig in den feldfreien Bereich der Partikelfalle gleiten zu lassen.

Gemäß der Erfindung ist die zweite Partikelfalle an einer Unterseite des Innenleiters angeordnet und mit dem Innenleiter verbunden. Dies ist insbesondere bei einer negativen Polarität der gasisolierten Anlage vorteilhaft, weil die höchste Aufenthaltswahrscheinlichkeit für die Partikel am Innenleiter, insbesondere auf einer Unterseite des Innenleiters ist. Die zweite Partikelfalle befindet sich in einem Winkelbereich zwischen einem -45-Grad-Winkel und einem +45-Grad-Winkel bezogen auf eine Senkrechtachse durch einen Mittelpunkt des Innenleiters.

Es ist hierbei anzumerken, dass die Partikelfallen für das erfindungsgemäße Partikelfallensystem sowohl gleichspannungstauglich als auch wechselspannungstauglich sind, so dass die erfindungsgemäße Anlage sowohl eine AC- als auch eine DC-Anlage sein kann. Besonders vorteilhaft ist es jedoch, das Partikelfallensystem in einer DC-Anlage einzusetzen.

Die Erfindung betrifft ferner eine Hochspannungsgleichstromübertragungsanlage mit einem Umrichter zum Übertragen elektrischer Leistung, der wechselspannungsseitig mit einem Wechselspannungsnetz und gleichspannungsseitig mit einer Gleichspannungsleitung verbunden ist.

Eine solche Hochspannungsgleichstromübertragungsanlage ist beispielsweise aus der WO 2017/055020 A1 bekannt. Sie wird meist zur Übertragung elektrischer Leistung über lange Distanzen von mehr als 100 km eingesetzt. Dabei liegt die Spannung in der Gleichspannungsleitung meist oberhalb von 100 kV.

Die Aufgabe der Erfindung besteht darin, eine solche Hochspannungsgleichstromübertragungsanlage vorzuschlagen, die einen möglichst fehlerfreien Betrieb ermöglicht.

Die Aufgabe wird bei einer artgemäßen Hochspannungsgleichstromübertragungsanlage dadurch gelöst, dass zumindest ein Teil der Gleichspannungsleitung eine erfindungsgemäße gasisolierte Anlage in Form einer gasisolierten Leitung ist.

Die Vorteile der erfindungsgemäßen Hochspannungsgleichstromübertragungsanlage ergeben sich aus den zuvor beschriebenen Vorteilen des erfindungsgemäßen Partikelfallensystems und der erfindungsgemäßen gasisolierten Anlage.

Die Erfindung wird im Folgenden anhand der Figuren 1 bis 6 weiter erläutert.
Figur 1 zeigt ein erstes Ausführungsbeispiel einer erfindungsgemäßen gasisolierten Anlage mit einem erfindungsgemäßen Partikelfallensystem in einer schematischen Querschnittsansicht;
Figur 2 zeigt ein zweites Ausführungsbeispiel einer erfindungsgemäßen gasisolierten Anlage mit einem erfindungsgemäßen Partikelfallensystems in einer schematischen Querschnittsansicht;
Figur 3 zeigt eine Partikelfalle für ein Partikelfallensystem in einer schematischen Teilansicht;
Figur 4 zeigt eine weitere Teilansicht der Partikelfalle der Figur 3;
Figur 5 zeigt eine weitere Partikelfalle für ein Partikelfallensystem in einer schematischen Teilansicht;
Figur 6 zeigt ein Ausführungsbeispiel einer erfindungsgemäßen Hochspannungsgleichstromübertragungsanlage in schematischer Darstellung.

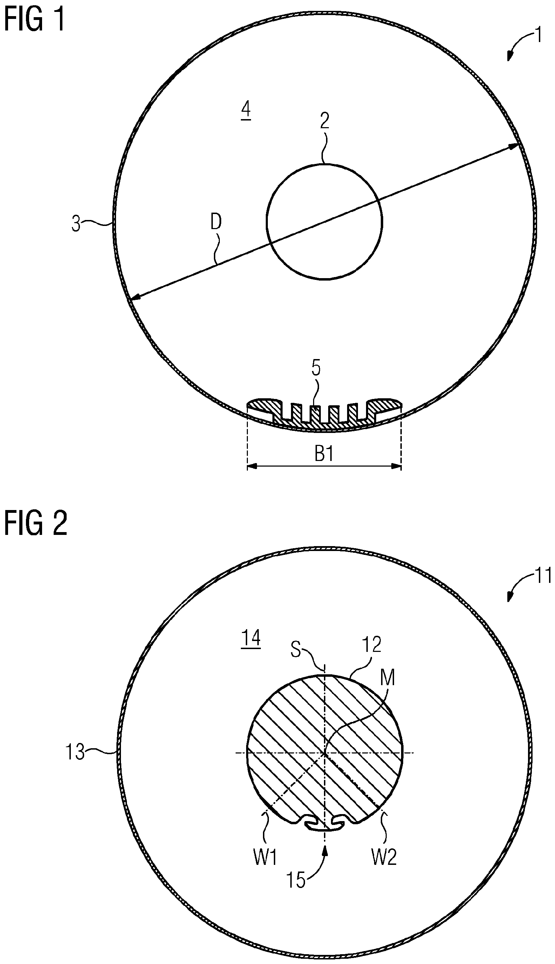

In Figur 1 ist eine gasisolierte Anlage 1 dargestellt. Die Anlage 1 umfasst einen Innenleiter 2 und ein Außenrohr 3. Ein Zwischenraum 4 innerhalb des Außenrohrs 3 ist im Betrieb der Anlage mit einem Isoliergas gefüllt, beispielsweise einem SF6 enthaltenden Gasgemisch. Das Außenrohr 3 und der Innenleiter 2 erstrecken sich senkrecht zur Zeichenebene der Figur 1. Der Innenleiter 2 und das Außenrohr 3 sind konzentrisch angeordnet. Das Außenrohr 3 weist einen gegebenen Durchmesser D = 600 mm auf.

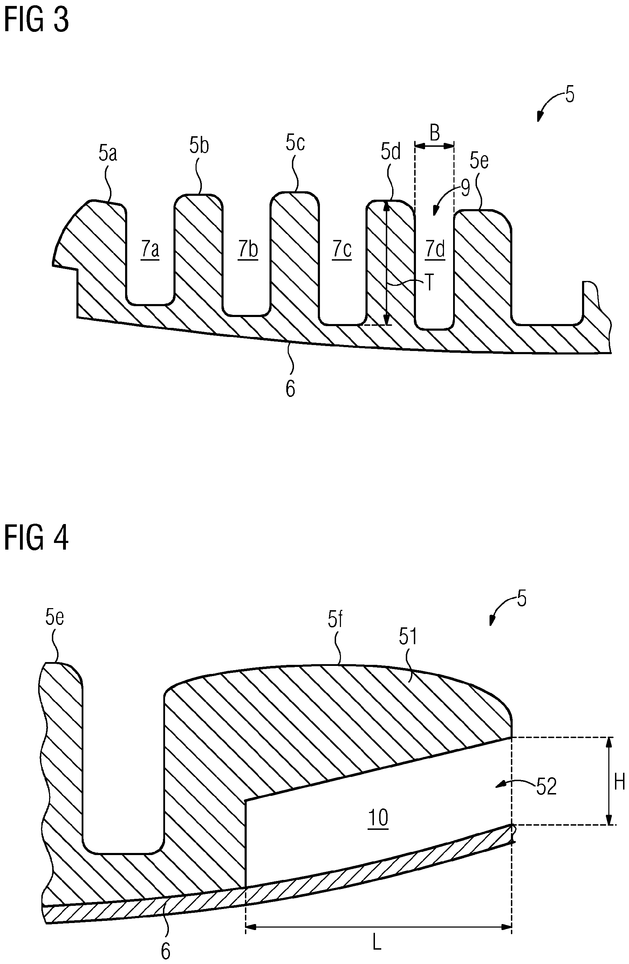

In einem unteren Außenrohrbereich ist eine erste Partikelfalle 5 eines Partikelfallensystems angeordnet. Die erste Partikelfalle 5 ist an das Außenrohr 3 angeschweißt. Sie erstreckt sich in einer Längsrichtung senkrecht zur Zeichenebene der Figur 1 entlang des Außenrohres 3. In einem Querschnitt parallel zur Zeichenebene weist die erste Partikelfalle 5 eine Breite B1 = 150 mm auf. Im dargestellten Ausführungsbeispiel beträgt also das Verhältnis des Durchmessers D zur Breite B1 D/B1 = 4. Auf den Aufbau der ersten Partikelfalle 5 wird in den nachfolgenden Figuren 3 und 4 näher eingegangen.

In Figur 2 ist eine weitere gasisolierte Anlage 11 dargestellt. Die Anlage 11 umfasst einen Innenleiter 12 und ein dazu konzentrisch angeordnetes Außenrohr 13. Ein Zwischen- bzw. Innenraum 14 innerhalb des Außenrohrs 13 ist im Betrieb der Anlage mit einem Isoliergas gefüllt, beispielsweise einem SF6 enthaltenden Gasgemisch. Das Außenrohr 13 und der Innenleiter 12 erstrecken sich senkrecht zur Zeichenebene der Figur 2.

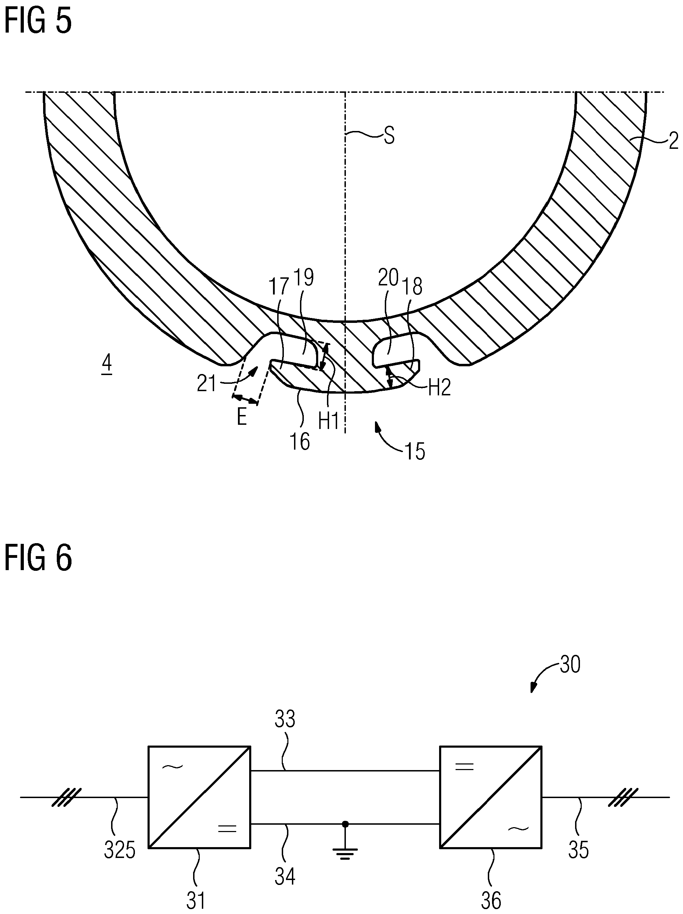

Die Anlage 11 umfasst eine zweite Partikelfalle 15 eines Partikelfallensystems. Die zweite Partikelfalle 15 ist an der Unterseite des Innenleiters 12 angeordnet und teilweise in diesen integriert. Die zweite Partikelfalle 15 befindet sich im dargestellten Ausführungsbeispiel in einem Winkelbereich zwischen einem Winkel W1 von -45 Grad und einem Winkel W2 von +45 Grad bezogen auf eine Senkrechtachse S durch einen Mittelpunkt M des Innenleiters 12. Auf den Aufbau der zweiten Partikelfalle 15 wird in der nachfolgenden Figur 5 näher eingegangen.

In Figur 3 ist eine Teilansicht des Querschnittsprofils der ersten Partikelfalle 5 der Figur 1 dargestellt. Die erste Partikelfalle umfasst eine Vielzahl von Abschirmelementen 5a-e, die sich jeweils von einer Basis 6 der Partikelfalle 5 in den Innenraum der Anlage 1 der Figur 1 erstrecken. Die Abschirmelemente 5a-e begrenzen eine Mehrzahl von Schlitzen 7a-d, die jeweils einen feldschwachen Bereich ausbilden.

Beispielsweise begrenzen ein erstes Abschirmelement 5d und ein zweites Abschirmelement 5e einen Schlitz 7d, der an seiner dem Innenraum 4 zugewandten Seite eine Partikeleintrittsöffnung 9 aufweist, durch die bewegliche Partikel in den Schlitz 7d gelangen können. Der Schlitz 7d weist im dargestellten Ausführungsbeispiel eine Breite B von 4 mm und eine Tiefe T von 10 mm auf.

In Figur 4 ist eine weitere Teilansicht des Querschnittsprofils der ersten Partikelfalle 5 der Figuren 1 und 3 dargestellt. Die erste Partikelfalle 5 umfasst ein weiteres, flügelförmiges Abschirmelement 5f. Mittels des Abschirmelements 5f ist ein Hinterschnitt 10 begrenzt, der sich zwischen dem Außenrohr 3 und einem Flügel 51 des flügelförmigen Abschirmelements 5f erstreckt. Der Hinterschnitt 10 ist mit einer Partikeleintrittsöffnung 52 zum Innenraum 4 der Anlage 1 geöffnet. Der Hinterschnitt 10 weist im dargestellten Ausführungsbeispiel eine Höhe H von 5 mm und eine Länge L von 15 mm auf.

In Figur 5 ist die zweite Partikelfalle 15 der Anlage 11 der Figur 2 in einer vergrößerten Querschnittsansicht dargestellt. Die zweite Partikelfalle 15 umfasst schirmförmiges Abschirmelement 16. Das schirmförmige Abschirmelement 16 umfasst einen ersten Schirm 17 und einen zweiten Schirm 18. Der erste Schirm 17 begrenzt einen ersten Spalt 19 zwischen dem Innenleiter 2 und dem ersten Schirm 17. Der zweite Schirm 18 begrenzt einen zweiten Spalt 20 zwischen dem Innenleiter 2 und dem zweiten Schirm 18. Die zweite Partikelfalle 15 ist bezüglich der Mittelachse S symmetrisch ausgebildet. Der erste Spalt 19 weist im dargestellten Beispiel eine Höhe H1 von 4,5 mm auf. Ferner ist der erste Spalt 19 zum Innenraum 4 hin an einer Partikeleintrittsöffnung 21 geöffnet. Die Spaltbreite E an der Partikeleintrittsöffnung 21 beträgt im dargestellten Beispiel 4,5 mm. Der erste Schirm 17 weist eine Schirmdicke H2 auf, die im dargestellten Beispiel 1 mm beträgt.

Es ist anzumerken, dass die erste Partikelfalle 5 der Figur 1 und die zweite Partikelfalle 15 der Figur 2 in einer und derselben gasisolierten Anlage eingesetzt sind, was jedoch aus Gründen der Übersichtlichkeit figürlich nicht dargestellt wurde.

Figur 6 zeigt ein Ausführungsbeispiel einer erfindungsgemäßen Hochspannungsgleichstromübertragungsanlage (HGÜ-Anlage) 30 mit einem ersten Umrichter 31, der eine Gleichspannungsseite und eine Wechselspannungsseite aufweist. Der erste Umrichter 31 kann beispielsweise ein netzgeführter oder ein selbstgeführter Umrichter sein. Der erste Umrichter 31 ist wechselspannungsseitig mit einer dreiphasigen Wechselspannungsleitung eines Wechselspannungsnetzes 32 und gleichspannungsseitig mit einer Gleichspannungsleitung 33 sowie einem Erdleiter 34 verbunden. Die Gleichspannungsleitung 33 ist im dargestellten Ausführungsbeispiel eine erdverlegte GIL, in der ein Partikelfallensystem, beispielsweise mit einer oder mehreren der Partikelfallen der Figuren 1 bis 5 angeordnet ist.

Die in Figur 6 dargestellte HGÜ-Anlage dient zur Übertragung elektrischer Leistung zwischen dem Wechselspannungsnetz 32 und einem weiteren Wechselspannungsnetz 35. Dazu ist ein zweiter Umrichter 36 vorgesehen, der gleichspannungsseitig mit der Gleichspannungsleitung 33 und dem Erdleiter 34 und wechselspannungsseitig mit dem weiteren Wechselspannungsnetz 35 verbunden.

## Patentansprüche

1. Gasisolierte elektrische Anlage (1) mit einem Innenleiter (2) und einem den Innenleiter (2) umgreifenden Außenrohr (3), und mit einem im Außenrohr (3) angeordneten Partikelfallensystem umfassend eine erste Partikelfalle (5) und eine zweite Partikelfalle (15), wobei die erste Partikelfalle (15) an einem Außenrohr (3) der Anlage (1) befestigt ist und die zweite Partikelfalle (15) an einer Unterseite des Innenleiters (2) angeordnet und mit ihm verbunden ist, wobei
die erste Partikelfalle (5) wenigstens ein erstes und ein zweites Abschirmelement (5d, 5e) umfasst, wobei mittels des ersten und des zweiten Abschirmelements (5d, 5e) ein sich vom Außenrohr in einen Innenraum (4) der Anlage erstreckender und zum Innenraum (4) hin unter Ausbildung einer ersten Partikeleintrittsöffnung (9) geöffneter Schlitz (7d) begrenzbar ist, wobei das Verhältnis einer Tiefe (T) des Schlitzes (7d) zu einer Breite (B) des Schlitzes (7d) an der ersten Partikeleintrittsöffnung (9) zwischen 1 und 8 beträgt, **dadurch gekennzeichnet, dass**
die zweite Partikelfalle (15) ein drittes, schirmförmiges Abschirmelement (16) umfasst, mittels dessen ein sich zwischen dem Innenleiter (2) und einem Schirm (17) des schirmförmigen Abschirmelements erstreckender Spalt (19) im Innenraum (4) der Anlage (1) begrenzbar ist, der unter Ausbildung einer zweiten Partikeleintrittsöffnung (21) zum Innenraum (4) hin geöffnet ist, wobei das Verhältnis einer Höhe (H1) des Spaltes zu einer Schirmdicke (H2) des schirmförmigen Abschirmelements (16) zwischen 1 und 5 beträgt, wobei die zweite Partikelfalle (15) sich in einem Winkelbereich zwischen einem -45-Grad-Winkel (W1) und einem +45-Grad-Winkel (W2) bezogen auf eine Senkrechtachse (S) durch einen Mittelpunkt (M) des Innenleiters (2) befindet.

2. Anlage (1) nach Anspruch 1, wobei die Breite (B) des Schlitzes (7d) an der ersten Partikeleintrittsöffnung (9) mindestens 4 mm beträgt.

3. Anlage (1) nach einem der vorangehenden Ansprüche, wobei die Breite (B) des Spaltes (19) an der zweiten Partikeleintrittsöffnung (21) mindestens 4 mm beträgt.

4. Anlage (1) nach einem der vorangehenden Ansprüche, wobei die erste Partikelfalle (5) ferner ein viertes, flügelförmiges Abschirmelement (5f) umfasst, mittels dessen ein sich zwischen dem Außenrohr (3) und einem Flügel (51) des flügelförmigen Abschirmelements (5f) erstreckender Hinterschnitt (10) im Innenraum (4) der Anlage (1) begrenzbar ist, der unter Ausbildung einer dritten Partikeleintrittsöffnung (52) zum Innenraum (4) hin geöffnet ist, wobei das Verhältnis einer Länge (L) des Hinterschnitts (10) zu einer Höhe (H) des Hinterschnitts (10) an der dritten Partikeleintrittsöffnung (52) zwischen 2 und 10 beträgt.

5. Anlage (1) nach einem der vorangehenden Ansprüche, wobei das Verhältnis einer Breite des Spaltes an der zweiten Partikeleintrittsöffnung zur Höhe des Spaltes zwischen 0,5 und 2 beträgt.

6. Anlage (1) nach Anspruch 1, wobei das Verhältnis eines Innendurchmessers (D) des Außenrohrs (3) zu einer Breite (B1) der ersten Partikelfalle (5) zwischen 2 und 13 beträgt.

7. Hochspannungsgleichstromübertragungsanlage (30) mit einem Umrichter (31) zum Übertragen elektrischer Leistung, der gleichspannungsseitig mit einer Gleichspannungsleitung (33, 34) verbunden ist,
**dadurch gekennzeichnet, dass**
zumindest ein Teil der Gleichspannungsleitung (33) eine gasisolierte Anlage (1) nach einem der vorangehenden Ansprüche in Form einer gasisolierten Leitung ist.

## Claims

1. Gas-insulated electrical installation (1) having an inner conductor (2) and an outer tube (3) engaging around the inner conductor (2), and having a particle trap system which is arranged in the outer tube (3) and comprises a first particle trap (5) and a second particle trap (15), wherein the first particle trap (15) is fastened to an outer tube (3) of the installation (1) and the second particle trap (15) is arranged on a bottom side of the inner conductor (2) and is connected to the said inner conductor, wherein the first particle trap (5) comprises at least a first and a second shielding element (5d, 5e), wherein a slot (7d) which extends from the outer tube into an interior space (4) in the installation and is open in the direction of the interior space (4) so as to form a first particle inlet opening (9) can be delimited by means of the first and the second shielding element (5d, 5e), wherein the ratio of a depth (T) of the slot (7d) to a width (B) of the slot (7d) at the first particle inlet opening (9) is between 1 and 8, **characterized in that** the second particle trap (15) comprises a third, umbrella-shaped shielding element (16) by means of which a gap (19) in the interior space (4) in the installation (1), which gap extends between the inner conductor (2) and a shield (17) of the umbrella-shaped shielding element and is open in the direction of the interior space (4) so as to form a second particle inlet opening (21), can be delimited, wherein the ratio of a height (H1) of the gap to a shield thickness (H2) of the umbrella-shaped shielding element (16) is between 1 and 5, wherein the second particle trap (15) is located in an angular range of between a -45-degree angle (W1) and a +45-degree angle (W2) with respect to a vertical axis (S) through a centre point (M) of the inner conductor (2).

2. Installation (1) according to Claim 1, wherein the width (B) of the slot (7d) at the first particle inlet opening (9) is at least 4 mm.

3. Installation (1) according to either of the preceding claims, wherein the width (B) of the gap (19) at the second particle inlet opening (21) is at least 4 mm.

4. Installation (1) according to one of the preceding claims, wherein the first particle trap (5) further comprises a fourth, wing-shaped shielding element (5f) by means of which an undercut (10) in the interior space (4) in the installation (1), which undercut extends between the outer tube (3) and a wing (51) of the wing-shaped shielding element (5f) and is open in the direction of the interior space (4) so as to form a third particle inlet opening (52), can be delimited, wherein the ratio of a length (L) of the undercut (10) to a height (H) of the undercut (10) at the third particle inlet opening (52) is between 2 and 10.

5. Installation (1) according to one of the preceding claims, wherein the ratio of a width of the gap at the second particle inlet opening to the height of the gap is between 0.5 and 2.

6. Installation (1) according to Claim 1, wherein the ratio of an inside diameter (D) of the outer tube (3) to a width (B1) of the first particle trap (5) is between 2 and 13.

7. High-voltage direct-current transmission installation (30) with a converter (31) for transmitting electrical power, which converter is connected on the DC voltage side to a DC voltage line (33, 34), **characterized in that** at least a portion of the DC voltage line (33) is a gas-insulated installation (1) according to one of the preceding claims in the form of a gas-insulated line.

## Revendications

1. Installation (1) électrique à isolation par du gaz comprenant un conducteur (2) et un tube (3) extérieur entourant le conducteur (2) intérieur et comprenant un système de piégeage de particules, qui est disposé dans le tube (3) extérieur et qui comprend un premier piège (5) de particules et un deuxième piège (15) de particules, dans laquelle le premier piège (15) de particules est fixé à un tube (3) extérieur de l'installation (1) et le deuxième piège (15) de particule est monté sur une face inférieure du conducteur (2) intérieur et est relié à lui, dans laquelle
le premier piège (5) de particule comprend au moins un premier et un deuxième éléments (5d, 5e) de protection, dans lequel, au moyen du premier et du deuxième éléments (5d, 5e) de protection, peut être délimitée une fente (7d) s'étendant du tube extérieur à un espace (4) intérieur de l'installation et ouverte vers l'espace (4) intérieur, avec formation d'une première ouverture (9) d'entrée de particules, le rapport d'une profondeur (T) de la fente (7d) à une largeur (B) de la fente (7d) à la première ouverture (9) d'entrée de particules étant compris entre 1 et 8, **caractérisée en ce que**
le deuxième piège (15) de particules comprend un troisième élément (16) de protection en forme d'écran, au moyen duquel un intervalle (19), s'étendant entre le conducteur (2) intérieur et un écran (17) de l'élément de protection en forme d'écran, peut être délimité dans l'espace (4) intérieur de l'installation (1), intervalle qui, avec formation d'une deuxième ouverture (21) d'entrée de particules, est ouvert vers l'espace (4) intérieur, le rapport d'une hauteur (H1) de l'intervalle à une épaisseur (H2) de protection de l'élément (16) de protection en forme d'écran étant compris entre 1 et 5, dans lequel le deuxième piège (15) de particules se trouve entre un angle (W1) de - 45° et un angle (W2) de + 45° rapporté à un axe (S) vertical passant par un centre (M) du conducteur (2) intérieur.

2. Installation (1) suivant la revendication 1, dans laquelle la largeur (B) de la fente (7d) à la première ouverture (9) d'entrée de particules est d'au moins 4 mm.

3. Installation (1) suivant l'une des revendications précédentes, dans laquelle la largeur (B) de l'intervalle (19) à la deuxième ouverture (21) de particules est d'au moins 4 mm.

4. Installation (1) suivant l'une des revendications précédentes, dans laquelle le premier piège (5) de particules comprend en outre un quatrième élément (5f) de protection en forme d'aile, au moyen duquel peut être délimitée, dans l'espace (4) intérieur de l'installation (1), une contredépouille (10), qui s'étend entre le tube (3) extérieur et une aile (51) de l'élément (5f) de protection en forme d'aile et qui est, avec formation d'une troisième ouverture (52) d'entrée de particules, ouverte vers l'espace (4) intérieur, le rapport d'une longueur (L) de la contredépouille (10) à une hauteur (H) de la contredépouille (10) à la troisième ouverture (52) d'entrée de particules étant compris entre 2 et 10.

5. Installation (1) suivant l'une des revendications précédentes, dans laquelle le rapport d'une largeur de l'intervalle à la deuxième ouverture d'entrée des particules à la hauteur de l'intervalle est compris entre 0,5 et 2.

6. Installation (1) suivant la revendication 1, dans laquelle le rapport d'un diamètre (D) intérieur du tube (3) extérieur à une largeur (B1) du premier piège (5) de particules est compris entre 2 et 13.

7. Installation (30) de transport de courant continu à haute tension, comprenant un convertisseur (31) de transport de puissance électrique, qui est connecté du côté de la tension continue à une ligne (33, 34) pour la tension continue,
**caractérisée en ce qu'**
au moins une partie de la ligne (33) pour la tension continue est une installation (1) à isolation par du gaz suivant l'une des revendications précédentes sous la forme d'une ligne à isolation par du gaz.
